# EUROPEAN PATENT APPLICATION

(11) **EP 4 015 063 A1**
(43) Date of publication of application: **22.06.2022**
(21) Application number: 20383113.6
(22) Date of filing: 17.12.2020
(51) Int. Cl.: B01D 53/62, B01D 53/83

(54) **METHOD TO CAPTURE CO2 IN FLUE GASES EMITTED INTERMITTENTLY**

(71) Applicant: Consejo Superior De Investigaciones Científicas (CSIC), 28006 Madrid (ES)
(72) Inventor: ABANADES GARCIA, Juan Carlos, 33011 Oviedo (Asturias) (ES); ARIAS ROZADA, Borja, 33011 Oviedo (Asturias) (ES); ALVAREZ CRIADO, Yolanda, 33011 Oviedo (Asturias) (ES)
(74) Representative: Pons

(57) **Abstract**

A method to capture CO₂ from the flue gases emitted intermittently from a power plant burning a synthetic fuel in power-to-fuel-to-power systems is disclosed. The method is characterized by arranging a reservoir of Ca(OH)₂ (21) to feed a flow of such solids (1) to a countercurrent carbonator (22) located in the flue gas path (2) of the power plant, separating the resulting carbonated solids (3) from the CO₂ depleted-gas (4), storing the carbonated solids (3) in a reservoir of CaCO₃ (24) while the power plant is operating, calcining (in 25) a steady flow of carbonated solids (5) to produce CaO solids (6) and CO₂ (14) when the power plant is not operating, hydrating (in 27) the resulting CaO solids (6) with water (8) to replenish the reservoir of Ca(OH)₂ (21) and feeding the CO₂ (14, 7) to the power-to-fuel system (100) to manufacture (in 32) and store (in 33) the synthetic fuel burned when the power plant is operating.

## Description

The invention relates to a method to capture CO₂ from the flue gases emitted intermittently from a power plant burning a synthetic fuel in power-to-fuel-to-power systems. The method is characterized by arranging a reservoir of Ca(OH)₂ to feed a flow of such solids to a countercurrent carbonator located in the flue gas path of the power plant, separating the resulting carbonated solids from the CO₂ depleted-gas, storing the carbonated solids in a reservoir of CaCO₃ while the power plant is operating, calcining a steady flow of carbonated solids to produce CaO solids and CO₂ when the power plant is not operating, hydrating the resulting CaO solids with water to replenish the reservoir of Ca(OH)₂ and feeding the CO₂ to the power-to-fuel system to manufacture and store the synthetic fuel burned when the power plant is operating.

### BACKGROUND ART

Climate change mitigation is calling for radical changes in the energy systems required to achieve full decarbonisation by 2050. It is generally accepted that future electricity networks aimed at a very high penetration of renewable sources with intermittent power output (wind, solar, etc.) will need some kind of back-up power systems to cover those periods where there is no sufficient power supply to match demand. Carbonaceous synthetic fuels manufactured from CO₂ and renewable hydrogen and/or electricity, are regarded as major candidates to store vast quantities of renewable energy in chemical form. Therefore, there is a growing interest on power-to-fuel-to-power processes, where renewable energy and pure CO₂ are first converted to a suitable synthetic fuel containing carbon (methane, methanol, Fisher-Tropsch liquids, etc.) during long "energy charge periods" when there is availability of low-cost renewable energy. The resulting synthetic fuel containing carbon can then be easily transported and/or stored at very low cost. Peaks of power can be then generated using this synthetic fuel, by air-firing it in turbines during brief power "discharge periods", when such power back-up is needed in the electricity network. Power discharge periods can occupy far less than 20% of the total hours in a year. With such a low capacity factor, and to avoid waste of capital, only low cost or amortized power equipment can be used during the brief power discharge periods, even if this comes with a certain sacrifice in energy conversion efficiencies. For example, open gas turbines of natural gas, or existing natural gas combined cycles, are already being used to back-up power in many countries with a high share of renewables in the electricity network. During the air-fired power discharge periods, flue gases with diluted CO₂ (2-10 vol% depending on the fuel and combustion conditions in turbines) are emitted to the atmosphere. Capturing such CO₂ represents an unsolved technical challenge, because existing technologies for CO₂ capture from such diluted CO₂ streams need to be designed for the maximum flow rate of flue gases (i.e. those emitted during pick power production). Since such existing capture technologies are capital intensive, they would be un-economic for the low capacity factors inherent in the power-to-fuel-to-power system described above. Therefore, the lack of CO₂ capture technologies for power-to-fuel-to-power processes introduces a fundamental environmental problem for these processes: even when the energy to transform CO₂ into synthetic fuel (power-to-fuel) is fully renewable, the system re-emits the carbon contained in the fuel to the atmosphere as CO₂ in the fuel-to-power part of the cycle. Making the power-to-fuel-to-power system carbon neutral would require the closing of such carbon loop. For example, by making the pure CO₂ entering the power-to-fuel-to-power system come from renewable sources (i.e. captured directly from the atmosphere or from biogenic sources). For the case of direct CO₂ capture from air, this is known to be energy inefficient and costly because of the very low concentration of CO₂ in air (about 400 ppm) compared to the CO₂ concentration in flue gases noted above. The use of biofuels as a source of carbon introduce additional environmental constrains (i.e. linked to known limitations on land use to grow biomass for energy purposes).

Relevant for the process is EP13382033, that discloses a flexible system of power generation integrating a flexible CO₂ capture method using CaO as regenerable sorbent of CO₂. The flexibility to adapt to a variable flue gas flows is achieved by using a high temperature silo of CaO, that supplies this material to the carbonator in order to match the flow of CO₂ in the flue gas and form CaCO₃. The resulting CaCO₃ is stored in a low temperature silo, waiting for calcination in an oxy-fired calciner to generate a rich CO₂ stream of gas. This is a gas with a CO₂ concentration above 95%vol (dry) in similar oxy-combustion calcination systems, and it can be considered suitable for effective purification before CO₂ compression for storage or use. By operating the calciner in steady state mode, it is possible to design the calciner smaller than what would be the case for a standard calcium looping system operating in steady state, thereby reducing the cost of the overall system when operating with low capacity factors (Criado et al., Calcium looping CO2 capture systems for back-up power plants. Energy & Environmental Science, 2017, 10, 1994-2004). However, the system of EP13382033 is designed with the objective to achieve the highest possible energy conversion efficiencies, by recovering energy from the high temperature solids in additional steam cycles. Also, the need for high temperature solid storage in these systems is likely to make technically more difficult the solid handling operations and therefore will increase the capital cost, because special equipment to store and handle those high temperature solids would be needed. Operating at lower temperatures would be also challenging because the particles of CaO are known to yield too modest carbonation conversions for practical purposes at temperatures below 600 °C (Criado et al. "Effect of carbonation temperature on the CO2 carrying capacity of CaO". I&EC Research, 27, 12595-12599, 2018). The need for capital intensive equipment such as large-scale steam cycles and high temperature silos will increase the capital cost and would make this flexible capture solution non-competitive under very low capacity factors (0.05 to 0.2) expected in future greenfield power-to-fuel-to-power systems.

Also relevant is US9610537B2, where a carbonator reactor is disclosed that includes multiple cyclones reactors connected in a tower as to achieve a countercurrent gas-solid contact mode, with the solids increasing their carbonate conversion when moving down through the different cyclone reactors and the gas decreasing the CO₂ content as it moves up through the different cyclone reactors. The operation of such device is similar to commercial suspension preheaters in cement plants, where the total residence time of the solids is known to be around 10 seconds per cyclone reactor, when operating with the fine particle size characteristics (i.e. dp<50 micron) of cement raw meals.

On the other hand, Ca(OH)₂ particles are known to react much faster with CO₂ in a wider temperature range between 300-700 ºC. Ca(OH)₂ has been proposed as an alternative sorbent of CO₂ in calcium looping systems. US8512661B2 presents the state of the art of this category of calcium looping processes for the efficient capture of CO₂ and sulphur from combustion flue gas streams and gasification gas mixtures, using regenerable and recyclable Ca(OH)₂ sorbents obtained by hydration of CaO at high temperatures. In particular, US8512661B2 discloses an advanced method of CO₂ capture by integrating a carbonation-calcination process in a conventional coal fired power plant, comprising a carbonator to remove the CO₂ from the flue gas by reacting it with Ca(OH)₂; separating a gas-solid mixture from said carbonator to form a lean-CO₂ flue gas and a carbonated solid stream; calcining said carbonated solid stream to form a concentrated CO₂ stream and a calcined sorbent stream; directing said calcined sorbent stream to a hydrator fed with preheated steam; hydrating said sorbent stream in said hydrator to form hydrated solids containing Ca(OH)₂; and directing said hydrated solids to said carbonator for the Ca(OH)₂ to react with the flue gas at temperatures between 500 to 700 ºC. It must be noted however that the process of US8512661 B2 is not generally accepted as it is not free from technical constrains that can make it costly and energy inefficient: the lower enthalpy of carbonation of Ca(OH)₂ (-74 kJ/mol) compared to CaO (-178 kJ/mol) reduces the possibilities to recover energy from carbonation and demand for high levels of energy recovery during hydration (inherently less energy efficient because hydration takes place at lower temperatures than carbonation). The high requirements of water for the hydration can also be a barrier depending on location. In general, these problems are exacerbated because the system is designed to operate in highly steady state mode, where the CO₂ flow is steadily captured in the carbonator from the flue gases and steadily released in concentrated form from the calciner. This means that all the pieces of equipment in the system (carbonator, calciner, hydrator, energy recovery equipment, solid handling, etc.) must be dimensioned proportionally to the power output of the main plant. Therefore, as discussed above for other existing CO₂ capture technologies, such an advanced calcium looping system, with all main pieces of equipment designed for the maximum power output of the power plant, will likely be un-economic for the low capacity factors characteristic of intermittently operated power-to-fuel-to-power systems, characterised by a low capacity factor (0.05 to 0.2) of all the equipment operated during the periods of maximum power output.

From the previous review of the state of the art, it can be concluded that there is an unsolved problem when it comes to have an energy cost-effective method for CO₂ capture from the flue gases emitted intermittently from power-to-fuel-to-power plants. They generate their maximum power output intermittently during fuel-to-power modes and emit CO₂ in flue gases that are currently unabated. They generate no flue gases during the power-to-fuel mode, and they require a steady flow of CO₂ during such period. Ideally, the system would be carbon neutral if the carbon flow could be made to flow in circular mode by capturing the CO₂ during the brief and intermittent stages of fuel-to-power and feeding the captured CO₂ to the long power-to-fuel stages. To avoid waste of capital in such a system with such closed carbon loop, it would be beneficial to have a CO₂ capture method requiring very low specific capital cost for the equipment that is used only during the brief periods of operation of the fuel-to-power plant, consistent with capacity factors of 0.05-0.2. In contrast, higher energy requirements and higher specific capital cost for the equipment could be allowed during the stages related to pure CO₂ generation, when energy will be available at much lower cost and the capacity factors will take high values between 0.95 and 0.8.

### SUMMARY OF THE INVENTION

The present invention discloses a novel and alternative solution for the closure of such carbon loop in power-to-fuel-to-power systems, by designing a flexible capture system that uses low cost Ca(OH)₂ materials at suitable temperatures and conditions to maximise the CO₂ capture efficiency while minimising the energy consumption and cost of the CO₂ capture device that treats the flow of flue gases emitted during the fuel-to-power part of the cycle. The system is able to capture the CO₂ from the flue gases emitted during the brief power discharge periods and supply it as a steady flow of pure CO₂ to the power-to-fuel system. The method is especially designed to capture CO₂ from the flue gas emitted from a turbine when burning with air a synthetic fuel containing carbon (methane, methanol, diethyl ether, Fisher-Tropsch liquids, etc.). The turbine will typically operate in the fuel-to-power part of a power-to-fuel-to-power system, conceived to provide energy storage service in future energy systems with high penetration of renewables.

Thus, a first aspect of the present invention is related to a method to capture CO₂ from a flue gas (2) emitted intermittently by a fuel turbine (34) of a power-to-fuel-to-power system (100) when firing with air a carbonaceous synthetic fuel contained in a tank (33), comprising the following steps:
a) when the turbine (34) is operating, conducting the flue gas to a carbonator wherein a molar flow of a calcium sorbent feeds from a first reservoir (21) to a carbonator (22) located in the flue gas path of a turbine, forming CaCO₃ containing solids;
b) when the turbine (34) is operating, separating the CaCO₃ containing solids (3) obtained in step (a) from the remaining flue gas and storing it in a second reservoir of solids (24);
c) when the turbine (34) is not operating, feeding a flow of CaCO₃ containing solids (5) from the second reservoir (24) to an oxy-fired calciner (25), calcining and heating up to a temperature of between 875 ºC and 950 ºC in presence of a fuel and oxygen;
characterized in that the calcium sorbent of step (a) is Ca(OH)₂, wherein the flue gas path of a turbine of step (a) is operated with a Ca/C molar ratio between 1 and 2 respect to the carbon flow in the flue gas;
wherein the carbonator (22) of the step (a) is a countercurrent carbonator; and
wherein the flow of the CaCO₃ containing solids (5) of step (c) is of between 1/10 and 1/20 respect the Ca(OH)₂ flow (1), and generating CaO (6) solids and a rich CO₂ stream (14); and wherein it comprises further steps of
d) separating CaO solids (6) obtained in step (c) from rich CO₂ stream (14) and return the CO₂ in pure form (7) resulting after purification to the manufacturing plant of synthetic fuel (32) and hydrate the CaO solids (6) with water (8) to produce Ca(OH)₂ (9); and
e) storing the Ca(OH)₂ (9) generated in step (d) in the first reservoir of solids (21) with a capacity between 1 to 2 mol Ca(OH)₂ per mol of carbon stored in the fuel tank (33), and re-initiate the sequence in step (a).

The advantages of the present invention is to capture CO₂ from the flue gases emitted intermittently from power-to-fuel-to-power systems when operating in fuel-to-power mode (i.e. with low capacity factors between 0.05 and 0.2) and return the captured CO₂ in pure form to the power-to-fuel system, thereby producing a carbon-neutral system, where the loop of carbon is closed. It is therefore critical in the process to use two large scale reservoirs of solids, one for Ca(OH)₂ and one for CaCO₃, because this is the way to effectively decouple the short duration CO₂ capture step in a) and b) (characterised by a large molar flow of Ca(OH)₂ matching the large molar flow of CO₂ contained in the turbine flue gases) from the long periods of time available to carry out the steps c), d) and e), that correspond to periods of time where the turbine is not operating.

A further advantage of these two solid reservoirs is that they serve as stable and easy storage at large scale of the CO₂ used in power-to-fuel-to-power energy storage systems with a closed carbon loop: the molar density of CaCO₃ (25 kmol/m³) is very close to the molar density in cryogenic storage tanks of CO₂. Also, due to the high enthalpy of calcination of CaCO₃ (ΔH=+178 kJ/mol), the large-scale storage of CaCO₃ allows for a more adequate use of the energy needed for the sorbent regeneration step, by operating in time periods when energy is more readily available for such energy demanding sorbent regeneration process. The oxy-calcination can thus take place when the energy cost is low (i.e. coinciding with the energy charging periods where power and CO₂ are converted to fuel in the power-to-fuel-to-power system).

A further technical advantage introduced by the two reservoirs of Ca(OH)₂ and CaCO₃ refers to the possibility to use a small calciner (as well as all devices linked to the scale of the calciner such as the air separation unit and hydrator) compared to the scale of the carbonator, as the calciner treats gas and solid flows between 2 and 20 times lower than those in the carbonator.

Due to the low capacity factors for the capture devices and other equipment in a) and b), it is very important that such capture devices and equipment have very low specific capital cost and can adapt well to treat the gases directly at the flue gas conditions of the combustion turbine. Therefore, the process is best suited to treat flue gases at 550-700 ºC from existing turbine, that are cooled down to a lower temperature (450 ºC - 550 ºC) to exploit the benefits of operating the carbonator at said lower temperatures, overcoming equilibrium limitations for high CO₂ capture efficiencies by carbonation. These low temperatures of carbonation will also facilitate the use of a simpler solid handling and simpler gas-solid separation equipment (i.e. bag filters).

Thus, a preferred embodiment of the method of the present invention provides the flue gas (2) from the fuel turbine at a temperature of between 550 ºC and 700 ºC is cooled down to a temperature of between 450 ºC and 550 ºC before entering the countercurrent carbonator (22).
Operating the countercarbonator at an optimum temperature of 450-550 ºC, for the equilibrium to allow a very high capture efficiency, while ensuring a fast carbonation reaction rate (i.e. a maximum carbonation conversion, Xₘₐₓ, achieved in just 30 seconds of gas-solid contact time). Furthermore, such gas-solid contact time in the order of 30 seconds are achievable in a Ca(OH)₂ carbonator involving three gas-solid cyclone separating stages, as it is the case in suspension preheaters of a cement plant or in CaO carbonators described in the state of the art. Therefore, it has been determined an operating window for the carbonation reaction of Ca(OH)₂ to progress at sufficient rate and up to a sufficient maximum carbonation conversion that depends on carbonation temperature.

In a more preferred embodiment of the method, the process is adapted to a combined cycle power plant with a standard configuration of gas turbine and heat recovery steam generator (HRSG).

The term "heat recovery steam generators" as used herein refers to a system design to recover the heat from the flue gas leaving the fuel turbine to produce steam to generate power in a steam cycle.

A first section of the HRSG is used to cool the flue gases from the turbine to 450 Cº-550 ºC and then using a second section of the HRSG to recover energy from the flue gases leaving the carbonator at 450-550 ºC, wherein the equilibrium partial pressures of CO₂ are as low as 0.0027 vol% and 0.075 vol%, respectively.

In another preferred embodiment of the present method the molar ratio between the large flow of Ca(OH)₂ and the minor flow of CaCO₃ is between 5 and 20. Thus, the system works as a back-up power system, with time fractions in fuel-to-power mode between 0.05 and 0.2, the capacity factors of the capture devices will also be between 0.05 and 0.2.

A further embodiment of the present invention provides the oxy-fired calciner (25) is supplied by renewable energy such us biomass, renewable electricity or a mixture of H₂ and ½ O₂ from water hydrolysis from renewable electricity.

Regarding the closure of the overall carbon loop in the overall power-to-fuel-to-power carbon loop, some losses of carbon are unavoidable in such carbon loop as CO₂ capture efficiencies over 90% in the carbonator would require uneconomically large reactors and other losses of carbon may be present in the power-to-fuel-to-power process. Therefore, a make-up flow of natural limestone, of between 1/10 and 1/20 of the total CaCO₃ entering the calciner, is arranged to be fed to the oxy-fired calciner and to maintain the necessary flow of carbon between the power-to-fuel-to-power process and the capture system. This necessarily results in a purge of CaO from the overall system, that could be used in the lime or cement industry. Preferably, the purge of solid material can be in the form of Ca(OH)₂ instead of CaO, so that the Ca(OH)₂ can be safely disposed and recarbonated in contact with atmosphere. When CaCO₃ is formed from purged Ca(OH)₂ and CO₂ from ambient air, it can be claimed that the overall system disclosed in this invention is carbon neutral.

Therefore, in another preferred embodiment of the method, between 1/10 and 1/20 of the Ca(OH)₂ is purged and dispossed to recarbonate in contact with atmosphere.

In another preferred embodiment, when the synthetic fuel containing carbon manufactured in (32) is synthetic natural gas and the fuel turbine (34) firing such fuel is part of a natural gas combined cycle, a preferred embodiment of the method involves the feeding of the flue gas leaving the gas turbine (2) into a first heat exchanger section of the heat recovery steam generator (30) of a natural gas combined cycle to produce a cooled flue gas flow containing CO₂ (16); feeding a large flow of Ca(OH)₂ solids (1) from the first reservoir (21) with the cooled flue gas flow (16) to a countercurrent carbonator (22) forming CaCO₃ containing solids (3); separating the CaCO₃ containing solids (3) from the lean-CO₂ flue gas (4) to store the solids in the second large reservoir of solids (24) and; feeding the lean CO₂ flue gas (4) into a second heat exchanger section of the heat recovery steam generator (31) and release a low temperature lean CO₂ flue gas (17) into the atmosphere.

In another preferred embodiment where such heat recovery steam generators are not available, as it is the case in back-up power plants using open cycle gas turbines, the cooling of the flue gas leaving the gas turbine (2) before contacting the Ca(OH)₂ flow (1) takes place by mixing with the flue gas (2) with an air flow (18) at ambient temperature to produce the cooled flue gas flow stream (16) entering the carbonator (22). A compromise needs to be found for the addition of this cooling air: there is no benefit in cooling the flue gas below 450 ºC, where the equilibrium partial pressure of CO₂ is already as low 0.0027 vol%, allowing theoretical capture efficiencies higher than 99%. Carbonation rates measured under these low temperatures remain very high but there are new experimental results indicating that maximum carbonation conversion of the solids will be lower. Therefore, a temperature window of operation of the carbonator between 450-550 ºC seems to be a good compromise to ensure high capture efficiencies in very short gas-solid contact times and sufficient utilisation of the solids for carbonation.

In any of the preferred embodiments, leakage and inneficiencies, in particular in the CO₂ absorption stages by carbonation of Ca(OH)₂ taking place in (22), will demand for a make-up flow of carbon to the system. In the proposed methods, this is between 0.005 and 0.025 (defined as the ratio between the molar flow of CO₂ entering with the make-up flow (12) and the molar flow of CO₂ contained in the flue gas leaving the fuel turbine (2)) because this has to balance the capture efficiencies of the carbonator of around 90% and the brief periods of time at which the carbonator is operating (capacity factors between 0.05 and 0.2).

A second aspect of the invention is a system according to the method described before for capturing CO₂ from a flue gas (2) emitted intermittently by a fuel turbine (34) when firing with air a carbonaceous synthetic fuel contained in a tank (33) characterized in that it comprises
- a first means of conduction configured to conducting the flue gas to a carbonator wherein a molar flow of a calcium sorbent feeds from the first reservoir (21) to a carbonator (22) located in the flue gas path of a turbine, forming CaCO₃ containing solids, when the turbine is operating;
- a first means of separation configured to separating the CaCO₃ containing solids (3) obtained in step (a) from the remaining flue gas and storing it in a second reservoir of solids (24), when the turbine (34) is operating;
- a second means of conduction configured to feeding a flow of CaCO₃ containing solids (5) from the second reservoir (24) to an oxy-fired calciner (25);
- wherein the calcium sorbent of the means for carbonation is Ca(OH)₂ and the means of calcination generate CaO (6) solids and a rich CO₂ stream (14);
- wherein the carbonator (22) is a countercurrent carbonator;
- a second means of separation configured to separating the generating CaO (6) solids and a rich CO₂ stream (14);
- a means of purification configured to purify the rich CO₂ stream (14);
- a third means of conduction configured to returning the CO₂ in pure form (7) to a fuel manufacturing plant (32)
- a means of hydration configured to hydrate the CaO solids (6) with water (8);
- a means of storage configured to storing the Ca(OH)₂ generated in the first reservoir of solids (21).

In a preferred embodiment of the system it further comprises a heat recovery steam generator of a combined cycle (30) configured to cooling flue gases from the turbine (2) in a first section of said heat recovery (30) and configured to cooling the flue gases leaving the carbonator (4) in a second section of the same heat recovery steam generator (31).

In another preferred embodiment of the system it further comprises a means of supply configured to supplying the oxy-fired calciner (25) by renewable energy such us biomass, renewable electricity or a mixture of H₂ and ½ O₂ from water hydrolysis from renewable electricity.

In another preferred embodiment of the system it further comprises a means of purge configured to purging between 1/10 and 1/20 of the Ca(OH)₂ from the first reservoir (21).

In another preferred embodiment of the system it further comprises a first heat exchanger section of the heat recovery steam generator (30) configured to produce a cooled flue gas flow containing CO₂ (16); feeding a large flow of Ca(OH)₂ solids (1) from the first reservoir (21) with the cooled flue gas flow (16) to a countercurrent carbonator (22) forming CaCO₃ containing solids (3); separating the CaCO₃ containing solids (3) from the lean-CO₂ flue gas (4) to store the solids in the second large reservoir of solids (24) and; feeding the lean CO₂ flue gas (4) into a second heat exchanger section of the heat recovery steam generator (31) and release a low temperature lean CO₂ flue gas (17) into the atmosphere, when the synthetic fuel containing carbon manufactured in (32) is synthetic natural gas and the fuel turbine (34) firing such fuel is part of a natural gas combined cycle.

In another preferred embodiment of the system it further comprises a means of cooling configured to achieve the mixing of the flue gas (2) with an air flow (18) at ambient temperature to produce the cooled flue gas flow stream (16) entering the carbonator (22). This preferred embodiment is useful when heat recovery steam generators are not available in the fuel-to-power part of the system, as it is the case in back-up power plants using open cycle gas turbines. The cooling of the flue gas leaving the gas turbine (2) before contacting of the Ca(OH)₂ flow (1) takes place when mixing with the air flow (18) at ambient temperature.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples, drawings and sequence listing are provided by way of illustration and are not intended to be limiting of the present invention.

### BRIEF DESCRIPTION OF THE DRAWINGS

**Fig. 1****.** Schematic of the CO₂ capture processes proposed to close the carbon loop in a power-to-fuel-to-power system (100).
**Fig. 2****.** The graph shows the evolution of the conversion of Ca(OH)₂ to CaCO₃ with the reaction time (dots represents experimental values and trends are represented by solid lines, following an Avrami's model curve).
**Fig. 3****.** The graph shows the evolution of the molar carbonate conversion achieved by Ca(OH)₂ to CaCO₃ with temperature after 30 seconds of carbonation reaction time (i.e. the value of Xₘₐₓ noted in Figure 2).

### Examples

### Example 1

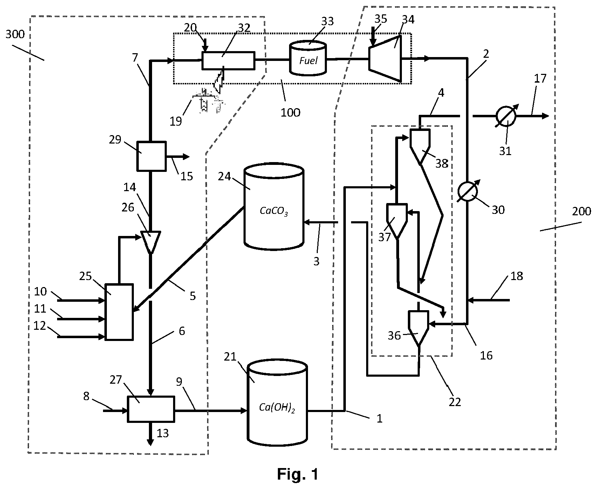

The particular example of design of the method disclosed in this patent is presented below, with reference to the notation of Figure 1 to refer to the mass and energy flows most relevant for the method. Figure 1 discloses a power-to-fuel-to-power (100) producing methane as synthetic fuel containing carbon and using a gas turbine combined cycle with a thermal input of 150 MWₜₕ. The fuel turbine (34) operates with a capacity factor of 0.1 during discharge periods and the fuel manufacturing plant (32) with a capacity factor of 0.9 during charge periods. During discharge periods, a methane flow of 3.0 kg/s is burned in the fuel turbine (34) producing a flue gas flow (2) of 136 kg/s at 630 ºC with a CO₂ concentration of 4 vol%CO₂ and containing a CO₂ molar flow of 0.188 kmol/s. The flue gas flow is fed into a first section of the heat recovery steam generator (30) and cooled down up to 530 ºC by extracting a thermal flow of 16.3 MWₜₕ before feeding it into the countercurrent carbonator (22).

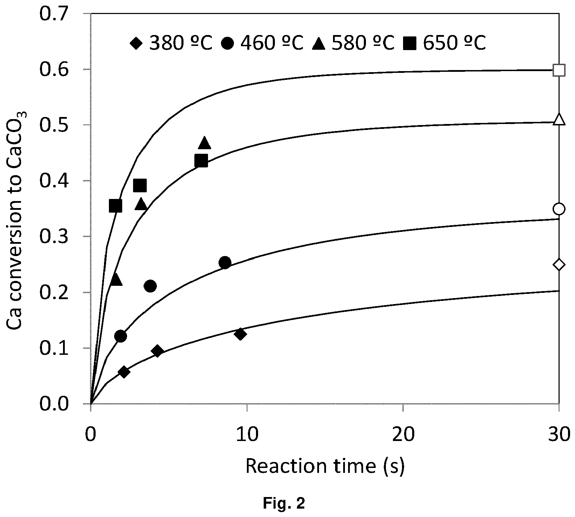

The countercurrent carbonator (22) is composed of three cyclone reactors. The CO₂ capture efficiency in the countercurrent carbonator (22) is 0.95 and the CO₂ volume fraction of the flue gas is reduced up to 0.002 before being emitted to the atmosphere. The sorbent conversion and the composition of the gas and solid streams leaving each cyclone reactor has been calculated by assuming an effective reaction time in each reactor cyclone of 4 seconds. The average concentration of CO₂ between the inlet and the outlet of the individual cyclone reactors is found by iteration until the carbon mass balance is fulfilled (carbon disappeared from the gas phase must equal the carbonate formed in the solid phase). This can be done by calculating solid conversion using the Avrami equation, that has been fitted to the experimental data of Figure 2 with X= (1- exp(-k t^{0.69}) Xₘₐₓ (with k=16.46 exp(25040/RT)). Two experimental devices are needed to access experimental information in the time interval of interest. Experimental results marked with black symbols have been obtained in a drop tube reactor with an internal diameter of 100 mm and a total length of 6 m. The device is electrically heated and experiments were carried out at isothermal conditions. Experiments have been carried out with a 5%ᵥₒₗ CO₂ and 20 % ᵥₒₗ H₂O in the reacting gases. Commercial Ca(OH)₂ with a purity >95% and an average particle size (dp₅₀) of 5 microns has been used as sorbent. Experimental results marked with white symbols are obtained from a thermogravimetric analyser operated under similar reaction temperature and gas composition, with sample weight of 3 mg of the same material.

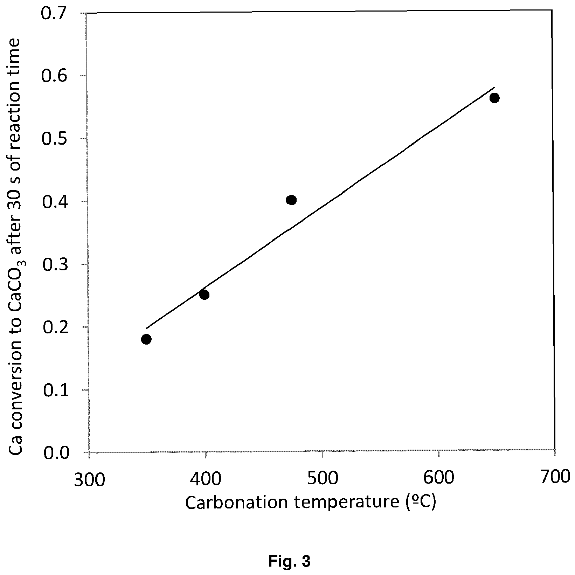

According to the data presented in Figure 3, a linear dependence of Xₘₐₓ (value noted in Figure 2) with the carbonation temperature is assumed in the range of temperatures of interest. Following this procedure, it can be estimated that a Ca(OH)₂ feeding rate of 0.420 kmol/s is needed in the carbonator reactor to achieve the target volume fraction of 0.002. Therefore, the evolution of said molar carbonate conversion achieved by Ca(OH)₂ to CaCO₃ with temperature after 30 seconds of carbonation is the technical limit for the design of the Ca(OH)₂ carbonator, as carbonate conversion cannot go over Xₘₐₓ for reasonable gas-solid contact times in the countercurrent carbonator (22).

Consequently, cooling the flue gas below 450 ºC, where the equilibrium partial pressure of CO₂ is already as low 0.0027 vol%, allows theoretical capture efficiencies higher than 99%. Carbonation rates measured under these low temperatures remain very high (Figure 2) but there are indications that maximum carbonation conversion of the solids will be lower (Figure 3).

According to scheme depicted in Figure 1 and the method above, the flue gas stream entering the countercurrent carbonator (22) meets a stream of partially carbonated solids coming from the second cyclone reactor (37) at 552 ºC with a carbonate conversion of 0.410 and enters the first cyclone reactor (36) where further carbonation of the sorbent particles takes place. Then, the CaCO₃ containing solids (3) are discharged from the countercurrent carbonator reactor (22) at a temperature of 536 ºC with a final carbonate conversion of 0.426 and sent to the second reservoir (24) to be stored.

The flue gas discharged from the first cyclone reactor (36) at a temperature of 536 ºC with a CO₂ volume fraction of 0.0386 is mixed with a stream of solids coming from the third cyclone reactor (38) at a temperature of 577 ºC and a carbonate content of 0.357 to react in the second cyclone reactor (37). After reacting, the partially carbonated solids are discharged from the second cyclone reactor (37) at a temperature of 552 ºC with a carbonate conversion of 0.410.

The flue gas discharged from the second cyclone reactor (37) at a temperature of 552 ºC with a CO₂ volume fraction of 0.034 is mixed with a flow of Ca(OH)ₛ solids (1) at 350 ºC to react in the thirdr cyclone reactor (38). After that, the flue gas leaving the third cyclone reactor (38) is cooled down in the second heat exchanger section of the heat recovery steam generator (31) to a temperature of 105 ºC, by extracting 73.6 MWₜₕ from the gases before being emitted to the atmosphere (17). This results in a leakage of just 0.009 kmol/s of CO₂ into the atmosphere.

In order to regenerate the Ca(OH)₂, a flow of CaCO₃ containing solids (5) of 2.77 kg/s is fed from the second solid reservoir (24) into an oxy-fired calciner (25). Also, a flow of 0.10 kg/s of fresh limestone (12) at 20 ºC is fed into the oxy-fired calciner (25) to compensate the CO₂ leakage in the lean CO₂ flue gas emitted to the atmosphere (17) during discharging periods and to close the carbon loop. In order to ensure a full calcination of the CaCO₃, the oxy-fired calciner (25) operates at temperatures between 875-950 ºC (the adiabatic heat balance in the calciner is closed at 910 ºC for the conditions of this particular example). This results into a heat demand in the calciner of 8.1 MWₜₕ for calcining the CaCO₃ and heating up the stream of solids entering the calciner (5 and 12). In this specific example, the heat demand is fulfilled by feeding a flow of fuel (10) of 0.06 kg H₂/s and a flow of oxygen (11) of 0.46 kg O₂/s. The gases and solids leaving the oxy-fired calciner (25) are separated in a second solids separation device (26) to produce a rich CO₂ stream (14) and CaO solids (6). The rich CO₂ stream (14) is sent to a purification unit (29) to produce a pure CO₂ stream (7) of 0.021 kmol/s that is fed into the manufacturing plant of synthetic fuel (32). On the other hand, the CaO solids (6) are sent to a hydrator reactor (27) where they react with a stream of 0.43 kg/s of H₂O (8) to produce 0.037 kmol/s of Ca(OH)₂ at a temperature of 350 ºC. Then, a stream of Ca(OH)₂ solids (9) of 0.047 kmol/s is diverted to the first reservoir (21) while a stream of Ca(OH)₂ solids (13) of 0.001 kmol/s is sent for disposal.
In another particular configuration of this example, biomass can be used as fuel (10) to fulfil the heat demand in the oxy-fired calciner (25). This results into an input of carbon into the loop that avoids the need of feeding a make-up flow (12) of natural limestone into the system. For the case described above, there is a biomass with a calorific value of 20 MJ/kg, a carbon content of 50 wt% and an oxygen requirements of 1.5 kg O₂/kg biomass, a flow of fuel (10) of 0.41 kg/s and a flow oxygen of 0.61 kg O₂/s of oxygen (11) are fed into the oxy-fired calciner (25) to fulfil the heat demand. After separation in the second solids separation device (26), the rich CO₂ stream (14) containing 0.036 kmolCO₂/s is sent to a to a purification unit (29) to produce a pure CO₂ stream (7) of 0.021 kmol/s that is fed into the manufacturing plant of synthetic fuel (32) and a second stream of pure CO₂ (15) of 0.016 kmolCO₂/s.
There are other opportunities to reduce the heat demand in the oxy-fired calciner by preheating the stream of solids entering the reactor (5 and 12) using the rich-CO₂ flue gas (14) and to increase the carbonator temperature by preheating of the Ca(OH)₂ solids (1) using the flue gas (4) leaving the countercurrent carbonator reactor (22) are not discussed. It will be obvious for a skilled in the art to take benefit from these method alternatives.

## Claims

1. Method to capture CO₂ from a flue gas (2) emitted intermittently by a fuel turbine (34) power-to-fuel-to-power system (100) when firing with air a carbonaceous synthetic fuel contained in a tank (33), comprising the following steps:
a) when the turbine (34) is operating, conducting the flue gas to a carbonator wherein a molar flow of a calcium sorbent feeds from a first reservoir (21) to a carbonator (22) located in the flue gas path of a turbine, forming CaCO₃ containing solids;
b) when the turbine (34) is operating, separating the CaCO₃ containing solids (3) obtained in step (a) from the remaining flue gas and storing it in a second reservoir of solids (24);
c) when the turbine (34) is not operating, feeding a flow of CaCO₃ containing solids (5) from the second reservoir (24) to an oxy-fired calciner (25), calcining and heating up to a temperature of between 875 ºC and 950 ºC in presence of a fuel and oxygen;
**characterized in that** the calcium sorbent of step (a) is Ca(OH)₂, wherein the flue gas path of a turbine of step (a) is operated with a Ca/C molar ratio between 1 and 2 respect to the carbon flow in the flue gas;
wherein the carbonator (22) of the step (a) is a countercurrent carbonator; and
wherein the molar flow of the CaCO₃ containing solids (5) of step (c) is of between 1/10 and 1/20 of the molar Ca(OH)₂ flow (1), and generating CaO (6) solids and a rich CO₂ stream (14); and wherein it comprises further steps of
d) separating CaO solids (6) obtained in step (c) from rich CO₂ stream (14) and return the CO₂ in pure form (7) resulting after purification to the manufacturing plant of synthetic fuel (32) and hydrate the CaO solids (6) with water (8) to produce Ca(OH)₂ (9); and
e) storing the Ca(OH)₂ generated in step (d) in the first reservoir of solids (21) with a capacity between 1 to 2 mol Ca(OH)₂ per mol of carbon stored in the fuel tank (33), and re-initiate the sequence in step (a).

2. Method according to claim 1 wherein the flue gas (2) from the fuel turbine at a temperature of between 550 ºC and 700 ºC is cooled down to a temperature of between 450 ºC and 550 ºC before entering the countercurrent carbonator (22).

3. Method according to any of claims 1 or 2, wherein the cooling of flue gases from the turbine (16) is carried out by a first section of a heat recovery steam generator of a combined cycle (30) and the flue gas leaving the carbonator (4) at a temperature of between 450 ºC and 550 ºC is cooled in a second section of the same heat recovery steam generator (31).

4. Method according to any of claims 1 to 3 wherein the molar ratio between the large flow of Ca(OH)₂ and the minor flow of CaCO₃ is between 5 and 20.

5. Method according to any of claims 1 to 4 wherein the oxy-fired calciner (25) is supplied by renewable energy such us biomass, renewable electricity or a mixture of H₂ and ½ O₂ from water hydrolysis from renewable electricity.

6. Method according to any of claims 1 to 5, wherein between 1/10 and 1/20 of the Ca(OH)₂ is purged from the first reservoir (21) and dispossed to recarbonate in contact with atmosphere.

7. Method according to any of claims 1 to 6, wherein the synthetic fuel containing carbon manufactured in (32) is synthetic natural gas and the fuel turbine (34) firing such fuel is part of a natural gas combined cycle, comprising a further step of feeding of the flue gas leaving the gas turbine (2) into a first heat exchanger section of the heat recovery steam generator (30) of a natural gas combined cycle to produce a cooled flue gas flow containing CO₂ (16); feeding a large flow of Ca(OH)₂ solids (1) from the first reservoir (21) with the cooled flue gas flow (16) to a countercurrent carbonator (22) forming CaCO₃ containing solids (3); separating the CaCO₃ containing solids (3) from the lean-CO₂ flue gas (4) to store the solids in the second large reservoir of solids (24) and; feeding the lean CO₂ flue gas (4) into a second heat exchanger section of the heat recovery steam generator (31) and release a low temperature lean CO₂ flue gas (17) into the atmosphere.

8. Method according to claim 1, wherein if the heat recovery steam generators are not available, as it is the case in back-up power plants using open cycle gas turbines, the cooling of the flue gas leaving the gas turbine (2) before the contacting of the Ca(OH)₂ flow (1) takes place by mixing with the flue gas (2) with an air flow (18) at ambient temperature to produce the cooled flue gas flow stream (16) entering the carbonator (22).

9. System according to the method described in any of claims 1 to 8, for capturing CO₂ from a flue gas (2) emitted intermittently by a fuel turbine (34) when firing with air a carbonaceous synthetic fuel contained in a tank (33) **characterized in that** it comprises
• a first means of conduction configured to conducting the flue gas to a carbonator wherein a molar flow of a calcium sorbent feeds from the first reservoir (21) to a carbonator (22) located in the flue gas path of a turbine, forming CaCO₃ containing solids, when the turbine is operating;
• a first means of separation configured to separating the CaCO₃ containing solids (3) obtained in step (a) from the remaining flue gas and storing it in a second reservoir of solids (24), when the turbine (34) is operating;
• a second means of conduction configured to feeding a flow of CaCO₃ containing solids (5) from the second reservoir (24) to an oxy-fired calciner (25);
• wherein the calcium sorbent of the means for carbonation is Ca(OH)₂ and the means of calcination generate CaO (6) solids and a rich CO₂ stream (14);
• wherein the carbonator (22) is a countercurrent carbonator;
• a second means of separation configured to separating the generating CaO (6) solids and a rich CO₂ stream (14);
• a means of purification configured to purifying the rich CO₂ stream (14);
• a third means of conduction configured to returning the CO₂ in pure form (7) to a fuel manufacturing plant (32)
• a means of hydration configured to hydrate the CaO solids (6) with water (8);
• a means of storage configured to storing the Ca(OH)₂ generated in the first reservoir of solids (21).

10. System according to claim 9, wherein it further comprises a heat recovery steam generator of a combined cycle (30) configured to cooling flue gases from the turbine (2) a first section of said heat recovery (31) and configured to cooling the flue gases leaving the carbonator (4) in a second section of the same heat recovery steam generator (31).

11. System according to any of claims 9 to 10, wherein it further comprises a means of supply configured to supplying the oxy-fired calciner (25) by renewable energy such us biomass, renewable electricity or a mixture of H₂ and ½ O₂ from water hydrolysis from renewable electricity.

12. System according to any of claims 9 to 11, wherein it further comprises a means of purge configured to purging between 1/10 and 1/20 of the Ca(OH)₂ from the first reservoir (21).

13. System according to any of claims 9 to 12, wherein it further comprises a first heat exchanger section of the heat recovery steam generator (30) configured to produce a cooled flue gas flow containing CO₂ (16); feeding a large flow of Ca(OH)₂ solids (1) from the first reservoir (21) with the cooled flue gas flow (16) to a countercurrent carbonator (22) forming CaCO₃ containing solids (3); separating the CaCO₃ containing solids (3) from the lean-CO₂ flue gas (4) to store the solids in the second large reservoir of solids (24) and; feeding the lean CO₂ flue gas (4) into a second heat exchanger section of the heat recovery steam generator (31) and release a low temperature lean CO₂ flue gas (17) into the atmosphere, when the synthetic fuel containing carbon manufactured in (32) is synthetic natural gas and the fuel turbine (34) firing such fuel is part of a natural gas combined cycle.

14. System according to any of claims 9 to 13, wherein it further comprises a means of cooling configured to mixing the flue gas (2) with an air flow (18) at ambient temperature to produce the cooled flue gas flow stream (16) entering the carbonator (22) if the heat recovery steam generators are not available, as it is the case in back-up power plants using open cycle gas turbines, where the cooling of the flue gas leaving the gas turbine (2) before contacting of the Ca(OH)₂ flow (1) takes place when mixing with the air flow (18) at ambient temperature.
